# FASCICULE DE BREVET EUROPEEN

(11) **EP 0 667 427 B1**
(45) Date de publication et mention de la délivrance du brevet: **02.05.2003**
(21) Numéro de dépôt: 95440005.7
(22) Date de dépôt: 08.02.1995
(51) Int. Cl.: E04D 5/02, D06N 5/00, B32B 5/26, E04D 5/10, D04H 1/46

(54) **Procédé de fabrication d'une armature bicouche textile destinée à la réalisation de chapes d'étanchéité bitumineuses pour toiture et armature ainsi obtenue**
Verfahren zur Herstellung einer zweischichtigen Textilarmierung für die Realisierung von bituminösen Dachdichtungsbelägen, sowie damit hergestellte Textilarmierung
Method of manufacturing a two-layer textile reinforcement for the realisation of impervious bituminous roof coverings, and textile reinforcement obtained thereby

(30) Priorité: 10.02.1994 FR 9401671
(43) Date de publication de la demande: 16.08.1995
(73) Titulaire: Firma Carl Freudenberg, 69469 Weinheim (DE)
(72) Inventeur: Baravian, Jean, F-68280 Sundhoffen (FR); Groten, Robert, F-68280 Sundhoffen (FR); Jahn, Ulrich, F-68910 Labaroche (FR); Beck, Jean-Jacques, F-68000 Colmar (FR)

(56) Documents cités:
- EP-A- 0 110 039
- EP-A- 0 176 847
- EP-A- 0 185 169
- EP-A- 0 208 918
- EP-A- 0 315 553
- EP-A- 0 435 001

## Description

La présente invention concerne le domaine des armatures textiles pour chapes d'étanchéité bitumineuses, et a pour objet un procédé de fabrication d'une telle armature bichouche textile, ainsi que l'armature ainsi obtenue.

Actuellement, ces armatures sont fréquemment constituées d'un nontissé imprégné et enduit à l'aide de bitumes modifiés par des polymères.

Ces armatures en polyester ont tendance à se substituer de plus en plus aux armatures de nontissé constituées de fibres de verre pour des raisons de résistance supérieure au poinçonnement et à la fissuration, liées à de meilleures caractéristiques mécaniques en rupture et en élasticité.

Cependant, ces armatures en nontissé polyester sont moins stables dimensionnellement que les armatures de nontissé constituées de fibres de verre, ce qui rend parfois nécessaire leur stabilisation par une combinaison avec une structure minérale telle qu'un réseau de filaments de verre, sous forme de grille ou de fils parallèles, principalement pour éviter une déformation de ces armatures lors du bituminage, et ultérieurement de la chape d'étanchéité disposée sur la toiture.

Mais actuellement, l'un des problèmes les plus aigus en relation avec de telles armatures est lié à leur inflammabilité.

En effet, en cas d'incendie d'un immeuble, il convient avant tout de tenter de maîtriser la propagation du feu afin d'éviter que les autres immeubles à proximité immédiate soient également atteints par l'incendie.

Or, lorsqu'un brandon enflammé parvient sur la chape de toiture, même recouverte de gravillons ou d'ardoise, celle-ci risque de prendre feu, principalement à cause du liant bitumineux, mais aussi à cause de la présence des fibres synthétiques telles que le polyester.

Ce problème devient en outre de plus en plus aigu du fait de l'évolution desdites armatures, celles-ci ayant tendance à contenir toujours davantage de fibres synthétiques par rapport aux fibres minérales. De même, l'évolution de la composition des bitumes les rend davantage inflammables.

Des normes et des réglementations strictes sont entrées en vigueur depuis quelques années afin de contrer ce danger de propagation du feu par les toitures en cas d'incendie d'immeubles.

Les solutions couramment employées, à ce jour, dans les systèmes d'étanchéité, pour obtenir un classement convenable selon les réglementations et les normes en vigueur contre les dangers d'incendie des toitures, consistent en l'utilisation d'une chape d'étanchéité, armée d'un voile de verre, disposée soudée en surface d'une membrane en bitume modifié armée de nontissé polyester.

Le document EP-A-0 208 918 décrit une armature textile et son procédé de fabrication. Dans ce document un matérial composite est décrit qui comprend un filet, une grille, un tricot constitué de fils polyester de haute ténacité stabilisé thermiquement, le cas échéant assemblé par couture-tricotage sur un mat synthétique, ledit matérial composite étant lui-même éventuellement assemblé sur une grille de verre ou filet tricoté de fils de verre, soit par couture-tricotage, soit laminé sur une grille de verre. Dans certain cas, l'assemblage peut se faire au cours d'un liage chimique des deux composants simultanément encollés.

D'autres solutions pour diminuer l'inflammabilité des chapes d'étanchéité bitumineuses ont alors vu le jour, telles que, par exemple, l'ajout d'un agent ignifugeant dans le bitume tel que l'hydrate d'alumine ou encore l'emploi de polyester du type connu sous la désignation "flame retardant".

Mais ces solutions ne donnent pas satisfaction, car tout en augmentant le coût de production, elles n'empêchent pas la propagation du feu. Le polyester non feu, par exemple, ne brûlera pas en cas d'incendie de l'immeuble, mais fondra et contribuera ainsi malgré tout à la propagation du feu.

Il convient donc de chercher à créer un véritable écran dans l'armature, dont la fonction spécifique est d'éviter la propagation du feu dans l'axe vertical et dans le plan.

Deux types de solutions existent principalement : une armature tricouche ou une armature bicouche.

Le premier type de solution, à savoir l'armature tricouche, n'est aboslument pas satisfaisant, car la couche formant écran anti-feu étant toujours disposée entre les deux autres couches formant l'armature, la couche comportant les fibres synthétiques, par exemple le nontissé polyester, sera toujours disposée en surface, une telle disposition étant précisément à éviter.

Le second type de solution, à savoir l'armature bicouche, présente, quant à lui, des difficultés de réalisation. En effet, une armature bicouche doit présenter une très bonne stabilité thermique, une force de retrait très faible ainsi qu'un retrait dimensionnel très faible, c'est-à-dire une très bonne stabilité dimensionnelle.

Or, toutes les armatures bicouches existant actuellement présentent, soit une mauvaise adhésion de la couche formant écran sur l'autre couche, soit une vitesse d'imprégnation faible lors du bituminage, soit encore un phénomène de curling, notamment également lors du bituminage.

En outre, la recherche d'une très bonne stabilité thermique passe souvent par une rigidité trop accrue de la couche formant écran, ce qui entraîne des difficultés lors du conditionnement par enroulement de l'armature.

Le problème posé par l'invention consiste donc à réaliser une armature bicouche textile destinée à la réalisation de chapes d'étanchéité bitumineuses pour toiture présentant une telle couche écran anti-feu, sans pour autant que la présence et les propriétés d'une telle couche n'entraînent les différents inconvénients décrits précédemment.

Ce problème posé est précisément résolu conformément au procédé objet de la présente invention, qui consiste tout d'abord, à partir dune première couche à base d'une nappe nontissée, à consolider cette nappe nontissée par liage mécanique ou hydraulique et à la thermostabiliser, puis à assembler cette première couche consolidée et thermostabilisée par contre-collage sur une seconde couche filamentaire minérale sous la forme d'une grille ou d'un tissu de fils minéraux continus ou discontinus ou sous la forme d'un voile de fibres minérales.

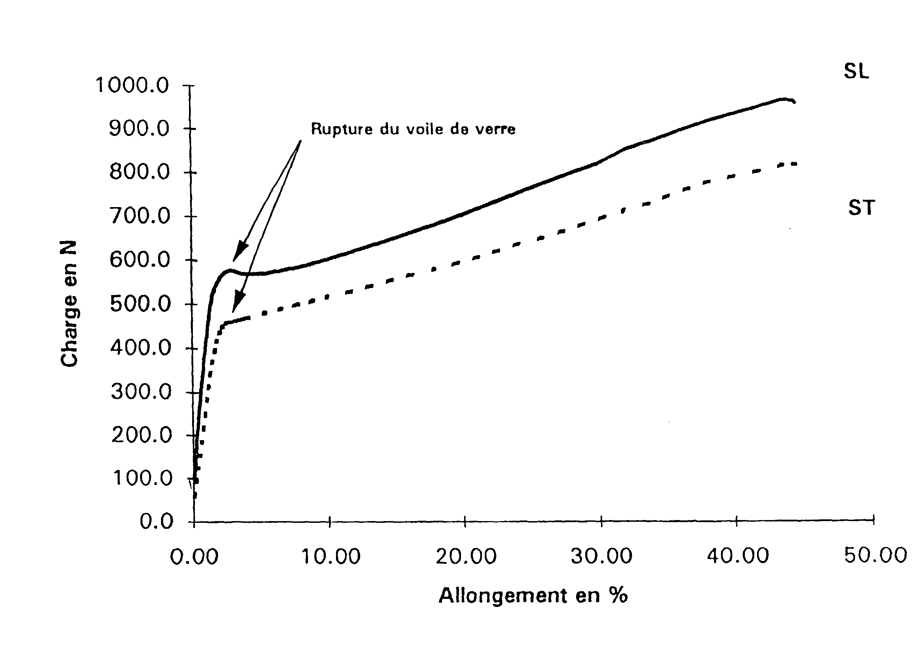

L'invention sera mieux comprise grâce à la description ci-après, qui se rapporte à un mode de réalisation préféré, donné à titre d'exemple non limitatif, et expliqué avec référence au dessin schématique annexé, dans lequel la figure unique représente une courbe de charge-allongement-rupture d'une chape d'étanchéité bitumineuse pourvue d'une armature bicouche textile conforme à l'invention (dynamométrie sur la chape).

Conformément à l'invention, le procédé consiste en outre à employer comme première couche une nappe non-tissée comprenant des filaments obtenus à partir d'une masse fondue.

La consolidation de la première couche à base d'une nappe nontissée s'effectue avant la thermostabilisation, selon une caractéristique préférentielle de l'invention, soit par aiguilletage, soit par jet d'eau.

La thermostabilisation de la première couche à base d'une nappe nontissée s'effectue à une température comprise entre 180°C et 240°C, préférentiellement de 200°C à 220°C, pendant une durée de 5 s à 60 s, préférentiellement de 8 s à 20 s.

La densité apparente après thermostabilisation est comprise entre 0,1 et 0,5, préférentiellement entre 0,15 et 0,3.

La thermostabilisation s'effectue, par exemple, à l'aide d'une calandre ou d'un tambour à air traversant, avec ou sans système de calibrage.

Dans le cas d'un assemblage des deux couches par contre-collage, la colle utilisée est un polymère thermodurcissable ou thermoplastique, avec ou sans agent réticulant, tel que polyester, copolyester, polyamide, copolyamide, polyuréthane, EVA (éthylène vinyle acétate) ou un mélange, de manière à obtenir une adhésion des deux couches de l'armature au moins jusqu'à 200°C.

Bien entendu, les méthodes d'assemblage des deux couches par fusion d'une partie de l'un des composants ne font pas partie intégrante de l'invention, car le collage par fibres liantes dans l'une des deux couches ne donne pas un résultat satisfaisant sur le produit fini prêt à l'emploi.

Selon une autre caractéristique de l'invention, la colle utilisée est préférentiellement un polyuréthane, copolyester ou EVA réticulé dont le point de fusion est compris entre 160°C et 220°C, plus particulièrement entre 190°C et 200°C. La quantité de colle utilisée est comprise entre 5 et 40 g/m², de préférence entre 8 et 30 g/m². Elle peut être sous la forme de poudre, fils, films, fibres, ou d'une présentation continue ou discontinue, réalisée à partir des polymères cités sous forme de solution, dispersion aqueuse ou hot melt. L'enduction se fait en continu ou préférentiellement en discontinu, afin de conserver une haute porosité, et, par conséquent, une vitesse de bitumination très élevée.

Après enduction, l'assemblage est réalisé dans des machines tournantes et chauffantes fonctionnant par transfert de calories, par exemple avec une calandre de type Stork, Lemaire, Schaetti ou avec un tambour à air traversant avec ou sans système de calibrage.

L'assemblage proprement dit est réalisé à une température comprise entre 180°C et 250°C, de préférence entre 190°C et 225°C, une faible pression en général inférieure à 20 daN/cm², de préférence comprise entre 2 daN/cm² et 10 daN/cm², pendant un temps de séjour compris entre 5 s et 60 s, de préférence entre 10 s et 30 s.

Il est préférable d'utiliser un panneau infrarouge pour présécher et fritter la colle dans le cas de l'utilisation d'une calandre.

La présente invention a également pour objet une armature bicouche textile destinée à la réalisation de chapes d'étanchéité bitumineuses pour toiture obtenues par application du procédé selon l'invention, armature caractérisée en ce que la première couche est à base d'une nappe nontissée obtenue par voie sèche, voie humide ou par extrusion d'une masse fondue sous forme de filaments, préférentiellement une nappe homogène de filaments continus en polymères synthétiques thermoplastiques, dépourvue de toute fibre liante, tels que polyester, copolyester, polyamide, copolyamide ou polyuréthane, et la seconde couche filamentaire minérale est sous la forme, soit d'une grille ou d'un tissu de fils minéraux continus ou discontinus, soit d'un voile de fibres minérales.

La nappe nontissée formant la première couche est préférentiellement une nappe homogène de filaments continus en polyterephtalate d'éthylène glycol réalisée par voie fondue directe. Le titre des filaments de la nappe formant la première couche et qui peuvent être de n'importe quelle section, plate, ronde ou profilée, est compris entre 2 et 15 dtex, préférentiellement entre 4 et 8 dtex, le poids de cette première couche étant compris entre 50 g/m² et 300 g/m², préférentiellement entre 80 g/m² et 200 g/m².

La seconde couche est préférentiellement sous la forme d'un voile de fibres minérales réalisé par voie sèche ou voie humide, plus particulièrement des fibres de verre discontinues avec liage chimique ou thermique, le poids de cette seconde couche étant compris entre 10 g/m² et 100 g/m², préférentiellement entre 40 g/m² et 60 g/m².

On obtient ainsi une armature bicouche textile selon l'invention, dont la principale propriété de la première couche est de conférer les caractéristiques mécaniques et physiques requises dans l'application de chapes d'étanchéité pour former l'ossature ou le renfort même de l'armature, et dont la principale propriété de la seconde couche est de créer une barrière contre le feu.

Le retrait à chaud et la force de retrait à une température de 200°C de la première couche doivent impérativement rester très faibles (c'est-à-dire moins de 2 %) afin que l'armature soit parfaitement plane après lamination et ne présente aucun effet de curling.

La seconde couche formant écran anti-feu est une couche filamentaire minérale unidirectionnelle ou multidirectionnelle qui peut être composée soit de fils minéraux continus, alliés de telle façon à la structure nontissée que celle-ci puisse garder ses propriétés d'élongation ou de déformabilité à la rupture. On utilisera de préférence un nontissé réalisé par voie sèche ou voie humide, plus particulièrement des fibres de verre discontinues avec liage, afin d'obtenir une grande stabilité dimensionnelle dans toutes les conditions de réalisation, de traitements ultérieurs et d'emploi.

Cette couche, outre sa fonction de retardatrice de propagation de flammes, doit garantir la stabilité mécanique dimensionnelle de l'armature lors du bituminage et de la chape appliquée sur la toiture.

La fonction de barrière contre le feu de cette seconde couche doit répondre en particulier aux normes DIN 4102 du Nordtest NT Fire 006 et de la réglementation française (arrêté du 10 septembre 1970 révisé en 1988 et relatif à la classification des couvertures en matériaux combustibles par rapport aux dangers d'incendie résultant d'un feu extérieur - Journal Officiel du 29 septembre 1970).

Les deux exemples qui suivent illlustrent parfaitement l'invention.

### EXEMPLE 1

La première couche est composée d'une nappe nontissée, obtenue à partir d'une masse fondue sous forme de filaments polyéthylène téréphtalate de titre 6 dtex présentant un poids de 160 g/m², et consolidée par aiguilletage mécanique avec une aiguilleteuse de type Asselin double frappe DF 41-44-16.

L'aiguille utilisée est de type Singer 15 x 18 x 40 x 3 RB22.

La profondeur de pénétration est de 9 mm sur une face et 13,5 mm sur l'autre face.

Le nombre de perforations par cm² est de 200.

La population d'aiguilles est d'environ 20000 aiguilles/m.

Le produit est calandré, avec une pression de 28 daN/cm, entre deux rouleaux métalliques chauffés à une température de 210 à 215°C, pour atteindre le retrait et la densité souhaités en passage en S avec un temps de contact d'environ 20 s.

Dans une deuxième phase, 25 g/m² de pâte de colle de marque Vinamul 3231 (dispersion aqueuse de copolymère d'éthylène vinyl acétate fabriquée par la société Vinamul) additionnée d'un agent réticulant de marque Dispercoll KA 8481 (dispersion de polyuréthane fabriquée par la société Bayer) dans une proportion de 10 % sont appliqués par sérigraphie en surface de cette première couche.

Après préséchage dans un four infrarouge, l'assemblage avec un voile de verre Microlith DH60 fabriqué par la société Schuller est réalisé par calandrage à une température de 200°C et un passage en S. Le temps de contact est de 15 s environ.

Le complexe contrecollé est alors imprégné sur une ligne de type Nardini à une vitesse de 14m/mn avec un bitume oxydé à une température de 175°C. Le bitume de surfaçage est un bitume modifié ave un SBS (élastomère styrène butadiène styrène) (taux de 13 %), la température étant de 170°C.

La chape obtenue est ardoisée, l'épaisseur étant de 5,5 mm et le poids approximatif de 5500 g/m².

Après bituminage, la chape répond à la norme Nordtest NT Fire 006.

Le tableau suivant précise les caractéristiques mécaniques obtenues et la figure unique montre la courbe de charge rupture illustrant une homogénéité parfaite dans le phénomène de rupture. La valeur de la stabilité dimensionnelle n'excède, en aucun cas, la limite de 0,2 % au test de stabilité dimensionnelle de l'UEATC.

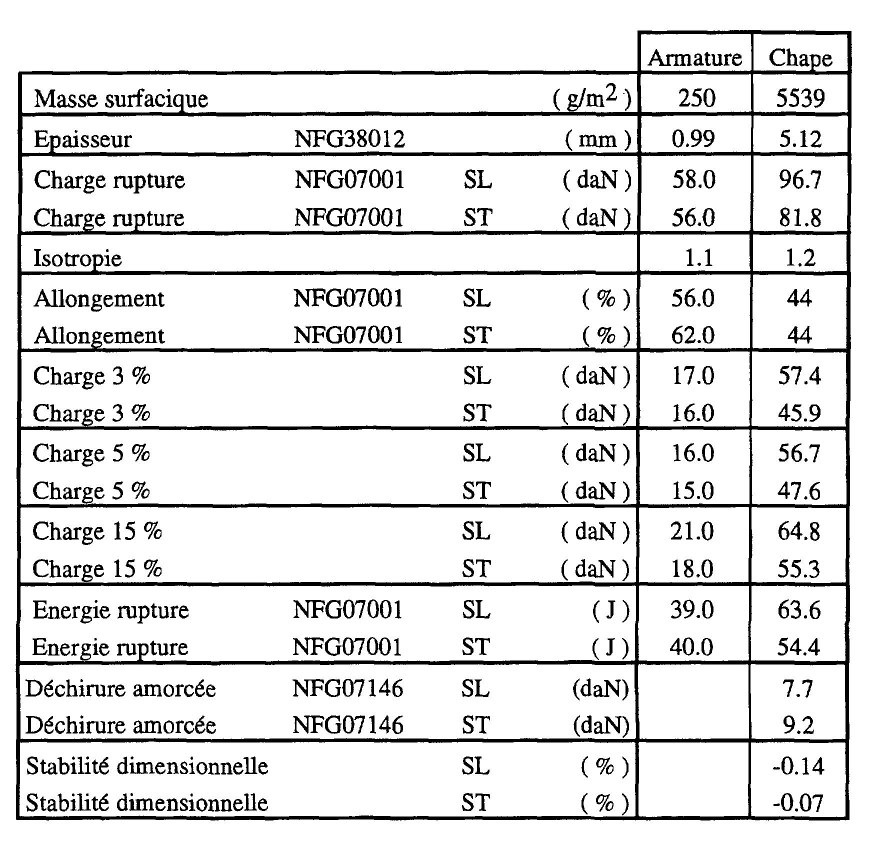

### EXEMPLE 2

La première couche est préparée de la même façon que l'exemple 1.

Dans une deuxième phase, une quantité de 10 g/m² de polyuréthane réactif hot melt est pulvérisée en surface de la nappe de polyester.

L'assemblage des deux couches est réalisé, immédiatement après l'unité de pulvérisation, avec un système de calibrage à température ambiante et faible pression de 5 daN/cm environ par le moyen de deux rouleaux métalliques.

La vitesse de la machine est réglée à 5 m/mn.

Les caractéristiques mécaniques obtenues pour ces complexes sont mentionnées dans le tableau suivant :

| | | | | |
|---|---|---|---|---|
| Masse surfacique | | | ( g/m² ) | 228 |
| Epaisseur | NFG38012 | | ( mm ) | 0.86 |
| Charge rupture / 5 cm | NFG07001 | SL | ( daN ) | 56 |
| | | ST | ( daN ) | 52 |
| Isotropie | | | | 1.08 |
| Allongement rupture | NFG07001 | SL | ( % ) | 56 |
| | | ST | ( % ) | 64 |
| Charge 3 % | | SL | ( daN ) | 27 |
| | | ST | ( daN ) | 16 |
| Charge 5 % | | SL | ( daN ) | 25 |
| | | ST | ( daN) | 16 |
| Charge 15 % | | SL | ( daN ) | 25 |
| | | ST | ( daN ) | 18 |
| Energie rupture | NFG07001 | SL | ( J ) | 41 |
| | | ST | ( J ) | 39 |
| Rupture verre | NFG07001 | SL | ( daN ) | 45 |
| | | ST | ( daN ) | 19 |
| | | SL | ( % ) | 1.7 |
| | | ST | ( % ) | 1.5 |

Les matériaux bicouches, réalisés selon les deux exemples décrits ci-dessus, se caractérisent donc par une excellente planéité, sans effet de curling, y compris lors et après la phase de bituminage.

Aucun effet de décollement ne se produira dans la transformation de l'armature en chape bituminée ni après vieillissement.

L'armature présente ainsi une excellente stabilité dimensionnelle lors de l'imprégnation et de l'enduction avec du bitume chaud dans la phase de transformation. De même, au test de stabilité dimensionnelle de la chape, les résultats sont excellents.

La courbe de charge-allongement-rupture de la chape d'étanchéité objet de la figure montre une charge à la rupture élevée, avec une élongation à la rupture supérieure à 40 %.

La rupture de l'élément en verre est parfaitement intégrée dans la courbe de rupture du constituant nontissé polyester, ceci étant le gage d'un fonctionnement mécanique excellent lors du vieillissement de l'étanchéité sur la toiture, même en cas de mouvements cycliques des supports ou panneaux isolants thermiques.

Comme l'illustrent les deux exemples ci-dessus, l'armature bicouche textile conforme à l'invention présente ainsi une excellente stabilité thermique tout en restant plane en toute circonstance, sans présenter aucun effet de curling, et tout en s'imprégnant facilement et en présentant un plan de collage très perméable.

De même l'armature présente d'excellentes propriétés mécaniques et physiques, à savoir une stabilité dimensionnelle excellente, c'est-à-dire une force de retrait ainsi qu'un retrait dimensionnel très faibles, une très grande souplesse, une très bonne résistance à la déchirure, une élongation et un allongement à la rupture excellents, une très bonne résistance au poinçonnement et surtout une synergie de la résistance à la rupture avec le bitume.

La chape ainsi obtenue présente une très bonne aptitude à la manipulation lors de la pose sur le toit, car n'étant ni trop rigide, ni trop souple.

La consolidation et la thermostabilisation n'intervenant que sur la première couche et avant assemblage avec la seconde couche et toutes fibres liantes étant absentes de la première couche, et donc tout thermoliage étant absent, l'armature conforme à l'invention ne présente aucune force de retrait significative.

Bien entendu, l'invention n'est pas limitée au mode de réalisation décrit et représenté au dessin annexé. Des modifications restent possibles, notamment du point de vue de la constitution des divers éléments, ou par substitution d'équivalents techniques, sans sortir pour autant du domaine de protection de l'invention.

## Revendications

1. Procédé de fabrication d'une armature bicouche textile destinée à la réalisation de chapes d'étanchéité bitumineuses pour toiture, procédé qui consiste tout d'abord, a partir d'une première couche à base de polymères synthétiques thermoplastiques et dépourvue de toute fibre liante, à consolider cette première couche à base par liage mécanique ou hydraulique et à la thermostabiliser, à ensuite assembler par contre-collage cette première couche consolidée et thermostabilisée sur une seconde couche filamentaire minérale sous la forme d'une grille ou d'un tissu de fils minéraux continus ou discontinus, la première couche étant une nappe nontissée obtenue par voie sèche, voie humide ou par extrusion d'une masse fondue sous forme de filaments.

2. Procédé de fabrication selon la revendication 1, **caractérisé en ce que** la consolidation de la première couche à base d'une nappe nontissée s'effectue avant la thermostabilisation.

3. Procédé de fabrication selon la revendication 1 ou 2, **caractérisé en ce que** la consolidation de la première couche s'effectue par aiguilletage ou par jet d'eau.

4. Procède de fabrication selon l'une quelconque des revendications 1 à 3, caractéisé en ce que la thermostabilisation de la première couche à base d'une nappe nontissée s'effectue à une température comprise entre 180°C et 240°C.

5. Procédé de fabrication selon la revendication 4, **caractérisé en ce que** la thermostabilisation de la première couche à base d'une nappe nontissée s'effectue a une température comprise entre de 200°C à 220°C, pendant une durée de 5 s à 60 s, préférentiellement de 8 s à 20 s.

6. Procédé de fabrication selon la revendication 5, **caractérisé en ce que** la thermostabilisation de la première couche à base d'une nappe nontissée s'effectue pendant une durée de 8 s à 20 s.

7. Procédé de fabrication selon la revendication 1, **caractérisé en ce que** la colle utilisée est un polymère thermodurcissable ou thermoplastique, avec ou sans agent réticulant.

8. Procédé de fabrication selon la revendication 7, **caractérisé en ce que** l'agent réticulant est un polyester, copolyester, polyamide, copolyamide, polyuréthane, EVA ou un mélange.

9. Procédé de fabrication selon l'une quelqonque des revendications 7 à 8, **caractérisé en ce que** le point de fusion de la colle utilisée est compris entre 160°C et 220°C.

10. Procédé de fabrication selon la revendication 9, **caractérisé en ce que** le point de fusion de la colle utilisée est compris entre 190°C et 200°C.

11. Procédé de fabrication selon l'une quelqonque des revendications 9 à 10, **caractérisé en ce que** la colle utilisée est un polyuréthane, copolyester ou EVA réticulé.

12. Procédé de fabrication selon l'une quelconque des revendications 7 à 11, **caractérisé en ce que** la quantité de colle utilisée est comprise entre 5 et 40 g/m².

13. Procédé de fabrication selon la revendication 12, **caractérisé en ce que** la quantité de colle utilisée est comprise entre 8 et 30 g/m².

14. Procédé de fabrication selon l'une quelconque des revendications 7 à 13, **caractérisé en ce que** l'assemblage proprement dit est réalisé à une température comprise entre 180°C et 250°C, à une faible pression en général inférieure à 20 daN/cm², pendant un temps de séjour compris entre 5 s et 60 s.

15. Procédé de fabrication selon la revendication 14, **caractérisé en ce que** l'assemblage proprement dit est réalisé à une température comprise entre 190°C et 225°C.

16. Procédé de fabrication selon l'une quelconque des revendications 14 à 15, **caractérisé en ce que** l'assemblage proprement dit est réalisé à une faible pression comprise entre 2 daN/cm² et 10 daN/cm²,

17. Procédé de fabrication selon l'une quelconque des revendications 14 à 16, **caractérisé en ce que** l'assemblage proprement dit est réalisé pendant un temps de séjour compris entre 10 s et 30 s.

18. Armature bicouche textile destinée à la réalisation de chapes d'étanchéité bitumineuses pour toiture comportant une première couche à base de polymères synthétiques thermoplastiques et dépourvue de toute fibre liante, cette première couche à base étant consolidé par liage mécanique ou hydraulique et étant thermostabilisé, et comportant une seconde couche filamentaire minérale qui est sous la forme soit d'une grille ou d'un tissu de fils minéraux continus ou discontinus, soit d'un voile de fibres minérales et qui est assemblée par contre-collage avec ladite première couche, la première couche étant une nappe nontissée obtenue par voie sèche, voie humide ou par extrusion d'une masse fondue sous forme de filaments.

19. Armature bicouche textile selon la revendication 18, **caractérisée en ce que** la première couche est une nappe homogène de filaments continus en polymères synthétiques thermoplastiques.

20. Armature bicouche textile selon la revendication 19, **caractérisée en ce que** la nappe nontissée formant la première couche est une nappe homogène de filaments continus en polyterephtalate d'éthylène glycol réalisée par voie fondue directe.

21. Armature bicouche textile selon l'une quelconque des revendications 18 à 20, **caractérisée en ce que** le titre des filaments de la nappe formant la première couche est compris entre 2 et 15 dtex, le poids de cette première couche étant compris entre 50 g/m² et 300 g/m².

22. Armature bicouche textile selon la revendication 21, **caractérisée en ce que** le titre des filaments de la nappe formant la première couche est compris entre 4 et 8 dtex.

23. Armature bicouche textile selon l'une quelconque des revendications 21 à 22, **caractérisée en ce que** le poids de cette première couche étant compris entre 80 g/m² est 200 g/m².

24. Armature bicouche textile selon l'une quelconque des revendications 18 à 23, **caractérisée en ce que** la seconde couche est réalisé par voie sèche ou voie humide.

25. Armature bicouche textile selon la revendication 24, **caractérisée en ce que** la seconde couche est sous la forme d'un voile de fibres minérales.

26. Armature bicouche textile selon l'une quelconque des revendications 24 à 25, **caractérisée en ce que** la seconde couche est sous la forme d'un voile de fibres de verre discontinues avec liage chimique ou thermique.

27. Armature bicouche textile selon l'une quelconque des revendications 18 à 26, **caractérisée en ce que** le poids de cette seconde couche est compris entre 10 g/m² et 100 g/m².

28. Armature bicouche textile selon la revendication 27, **caractérisée en ce que** le poids de cette seconde couche est compris entre 40 g/m² et 60 g/m².

29. Utilisation d'une armature bicouche textile selon l'une quelconque des revendications 18 à 28, **caractérisée en ce que** l'armature est destinée à la réalisation de chapes d'étanchéité bitumineuses pour toiture.

## Patentansprüche

1. Herstellungsverfahren einer zweischichtigen Textilbeschichtung für die Herstellung einer bituminösen Abdichtung für Dachbahnen, wobei in diesem Verfahren zuerst - ausgehend von einer ersten Schicht aus synthetischen thermoplastischen Polymeren und ohne Bindefasem - diese erste Grundschicht durch mechanische oder hydraulische Verbindung verstärkt und thermostabilisiert wird und dann diese erste verstärkte und thermostabilisierte Schicht auf eine zweite Schicht aus Mineralgamen in Form eines Gitternetzes oder eines Gewebes aus Endlos- oder Nichtendlosmineralgam aufgeklebt wird, bei der ersten Schicht handelt es sich dabei um einen Vlies, der durch Trockenverfahren, Feuchtverfahren oder Extrusion einer Schmelzmasse in Form von Garnen hergestellt wird.

2. Herstellungsverfahren gemäß Patentanspruch 1, wobei die Verstärkung der ersten Schicht durch einen Vlies vor der Thermostabilisierung erfolgt.

3. Herstellungsverfahren gemäß einem der Patentansprüchen 1 und 2, wobei die Verstärkung der ersten Schicht durch Nadelung oder durch Wasserstrahl erfolgt.

4. Herstellungsverfahren gemäß einem der Patentansprüche 1 bis 3, wobei die Thermostabilisierung der ersten Schicht durch einen Vlies bei einer Temperatur zwischen 180° C und 240° C erfolgt.

5. Herstellungsverfahren gemäß Patentanspruch 4, wobei die Thermostabilisierung der ersten Schicht durch einen Vlies bei einer Temperatur zwischen 200° C bis 220° C in einem Zeitraum von 5 s bis 60 s, vorzugsweise von 8 s bis 20 s, erfolgt.

6. Herstellungsverfahren gemäß Patentanspruch 5, wobei die Thermostabilisierung der ersten Schicht durch einen Vlies in einem Zeitraum von 8 s bis 20 s erfolgt.

7. Herstellungsverfahren gemäß Patentanspruch 1, wobei der verwendete Klebstoff ein thermohärtendes oder thermoplastisches Polymer mit oder ohne vemetzenden Wirkstoff ist.

8. Herstellungsverfahren gemäß Patentanspruch 7, wobei der vemetzende Wirkstoff ein Polyester, Copolyester, Polyamid, Copolyamid, Polyurethan, EVA oder ein Gemisch ist.

9. Herstellungsverfahren gemäß einem der Patentansprüche 7 bis 8, wobei der Schmelzpunkt des verwendeten Klebstoffes zwischen 160° C und 200° C liegt.

10. Herstellungsverfahren gemäß Patentanspruch 9, wobei der Schmelzpunkt des verwendeten Klebstoffes zwischen 190° C und 200° C liegt.

11. Herstellungsverfahren gemäß einem der Patentansprüche 9 bis 10, wobei der verwendete Klebstoff ein Polyurethan, Copolyester oder vernetztes EVA ist.

12. Herstellungsverfahren gemäß einem der Patentansprüche 7 bis 11, wobei die Menge des verwendeten Klebstoffes zwischen 5 und 40 g/m² liegt.

13. Herstellungsverfahren gemäß Patentanspruch 12, wobei die Menge des verwendeten Klebstoffes zwischen 8 und 30 g/m² liegt.

14. Herstellungsverfahren gemäß einem der Patentansprüche 7 bis 13, wobei die tatsächliche Zusammenfügung bei einer Temperatur zwischen 180° C und 250° C bei einem geringen Druck, im allgemeinen unter 20 daN/cm³ in einem Zeitraum zwischen 5 s und 60 s erfolgt.

15. Herstellungsverfahren gemäß Patentanspruch 14, wobei die tatsächliche Zusammenfügung bei einer Temperatur zwischen 190° C und 225° C erfolgt.

16. Herstellungsverfahren gemäß einem der Patentansprüche 14 bis 15, wobei die tatsächliche Zusammenfügung bei einem geringen Druck zwischen 2 daN/cm³ und 10 daN/cm³ erfolgt.

17. Herstellungsverfahren gemäß einem der Patentansprüche 14 bis 16, wobei die tatsächliche Zusammenfügung in einer Zeit im Ofen von 10 s bis 30 s erfolgt.

18. Zweischichtige Textilbeschichtung für die Herstellung einer bituminösen Abdichtung für Dachbahnen mit einer ersten Grundschicht aus synthetischen thermoplastischen Polymeren und ohne Bindefasern, wobei diese erste Grundschicht durch mechanische oder hydraulische Verbindung verstärkt und thermostabilisiert ist und eine zweite Schicht aus Mineralgamen in Form eines Gittemetzes oder eines Gewebes aus Endlos- oder Nichtendlosmineralgarn oder eines Films aus Mineralgamen auf die erste Schicht aufgeklebt ist, bei der ersten Schicht handelt es sich um einen Vlies handelt, der durch Trockenverfahren, Feuchtverfahren oder Extrusion einer Schmelzmasse in Form von Garnen hergestellt wird.

19. Zweischichtige Textilbeschichtung gemäß Patentanspruch 18, wobei die erste Schicht ein homogener Vlies von Endlosgamen aus thermoplastischen synthetischen Polymeren ist.

20. Zweischichtige Textilbeschichtung gemäß Patentanspruch 19, wobei der Vlies, aus dem die erste Schicht besteht, ein homogener Vlies von Endlosgarnen aus Glykolethylenpolyterephtalate ist, die mittels direkter Verschmelzung hergestellt werden.

21. Zweischichtige Textilbeschichtung gemäß einem der Patentansprüche 18 bis 20, wobei die Dichte der Garne des Vliesstoffes der ersten Schicht zwischen 2 und 15 dtex liegt und das Gewicht dieser ersten Schicht zwischen 50 g/m² und 300 g/m² liegt.

22. Zweischichtige Textilbeschichtung gemäß Patentanspruch 21, wobei die Dichte der Garne des Vliesstoffes der ersten Schicht zwischen 4 und 8 dtex liegt.

23. Zweischichtige Textilbeschichtung gemäß einem der Patentansprüche 21 bis 22, wobei das Gewicht dieser ersten Schicht zwischen 80 g/m² und 200 g/m² liegt.

24. Zweischichtige Textilbeschichtung gemäß einem der Patentansprüche 18 bis 23, wobei die zweite Schicht durch Trocken- oder Feuchtherstellung produziert wird.

25. Zweischichtige Textilbeschichtung gemäß Patentanspruch 24, wobei die zweite Schicht aus einem dünnen Film aus Mineralfasern besteht.

26. Zweischichtige Textilbeschichtung gemäß einem der Patentansprüche 24 bis 25, wobei die zweite Schicht aus einem dünnen Film aus Endlosglasfasern mit einer chemischen oder thermischen Verbindung besteht.

27. Zweischichtige Textilbeschichtung gemäß einem der Patentansprüche 18 bis 26, wobei das Gewicht zwischen 10 g/m² oder 100 g/m² liegt.

28. Zweischichtige Textilbeschichtung gemäß Patentanspruch 27, wobei das Gewicht dieser zweiten Schicht zwischen 40 g/m² und 60 g/m² liegt.

29. Einsatz einer zweischichtigen Textilbeschichtung gemäß einem der Patentansprüche 16 bis 28, wobei die Beschichtung zur Herstellung einer bituminösen Abdichtung für Dachbahnen dient.

## Claims

1. A process for manufacturing a textile two-layer reinforcement intended for the production of bituminous roofing membranes, which process firstly consists, starting from a first layer based on thermoplastic synthetic polymers and containing no bonding fibre, in consolidating this base first layer by mechanical or hydraulic bonding and in heat-stabilizing it, then in assembling, by laminating, this first consolidated and heat-stabilized first layer to a mineral filamentary second layer in the form of a mesh or fabric of continuous or discontinuous mineral yarns, the first layer being a nonwoven web obtained by a dry route, a wet route or by extrusion of a molten mass in the form of filaments.

2. A manufacturing process according to claim 1, **characterized in that** the consolidation of the first layer based on a nonwoven web is carried out before the heat stabilization.

3. A manufacturing process according to claim 1 or 2, **characterized in that** the consolidation of the first layer is carried out by needle-bonding or by water jets.

4. A manufacturing process according to any one of claims 1 to 3, **characterized in that** the heat stabilization of the first layer based on a nonwoven web is carried out at a temperature of between 180°C and 240°C.

5. A manufacturing process according to claim 4, **characterized in that** the heat stabilization of the first layer based on a nonwoven web is carried out at a temperature of between 200°C and 220°C, for a time of 5 s to 60 s, preferably 8 s to 20 s.

6. A manufacturing process according to claim 5, **characterized in that** the heat stabilization of the first layer based on a nonwoven web is carried out for a time of 8 s to 20 s.

7. A manufacturing process according to claim 1, **characterized in that** the adhesive used is a thermosetting or thermoplastic polymer, with or without a crosslinking agent.

8. A manufacturing process according to claim 7, **characterized in that** the crosslinking agent is a polyester, copolyester, polyamide, copolyamide, polyurethane, EVA or a blend.

9. A manufacturing process according to either of claims 7 and 8, **characterized in that** the melting point of the adhesive used is between 160°C and 220°C.

10. A manufacturing process according to claim 9, **characterized in that** the melting point of the adhesive used is between 190°C and 200°C.

11. A manufacturing process according to either of claims 9 and 10, **characterized in that** the adhesive used is a crosslinked polyurethane, copolyester or EVA.

12. A manufacturing process according to any one of claims 7 to 11, **characterized in that** the amount of adhesive used is between 5 and 40 g/m².

13. A manufacturing process according to claim 12, **characterized in that** the amount of adhesive used is between 8 and 30 g/m².

14. A manufacturing process according to any one of claims 7 to 13, **characterized in that** the actual assembly is carried out at a temperature of between 180°C and 250°C, at a low pressure generally less than 20 daN/cm², with a residence time of between 5 s and 60 s.

15. A manufacturing process according to claim 14, **characterized in that** the actual assembly is carried out at a temperature of between 190°C and 225°C.

16. A manufacturing process according to either of claims 14 and 15, **characterized in that** the actual assembly is carried out at a low pressure of between 2 daN/cm² and 10 daN/cm².

17. A manufacturing process according to any one of claims 14 to 16, **characterized in that** the actual assembly is carried out with a residence time of between 10 s and 30 s.

18. A textile two-layer reinforcement intended for the production of bituminous roofing membranes, comprising a first layer based on thermoplastic synthetic polymers and containing no bonding fibre, this base first layer being consolidated by mechanical or hydraulic bonding and being heat-stabilized, and comprising a mineral filamentary second layer which is in the form either of a mesh or fabric of continuous or discontinuous mineral yarns or of a ply of mineral fibres and which is assembled, by laminating, with the said first layer, the first layer being a nonwoven web obtained by a dry route, a wet route or by extrusion of a molten mass in the form of filaments.

19. A textile two-layer reinforcement according to claim 18, **characterized in that** the first layer is a homogeneous web of continuous filaments made of thermoplastic synthetic polymers.

20. A textile two-layer reinforcement according to claim 19, **characterized in that** the nonwoven web forming the first layer is a homogeneous web of continuous polyethylene glycol terephthalate filaments obtained by a direct melt route.

21. A textile two-layer reinforcement according to any one of claims 18 to 20, **characterized in that** the linear density of the filaments of the web forming the first layer is between 2 and 15 dtex, the weight of this first layer being between 50 g/m² and 300 g/m².

22. A textile two-layer reinforcement according to claim 21, **characterized in that** the linear density of the filaments of the web forming the first layer is between 4 and 8 dtex.

23. A textile two-layer reinforcement according to either of claims 21 and 22, **characterized in that** the weight of this first layer is between 80 g/m² and 200 g/m².

24. A textile two-layer reinforcement according to any one of claims 18 to 23, **characterized in that** the second layer is produced by a dry route or a wet route.

25. A textile two-layer reinforcement according to claim 24, **characterized in that** the second layer is in the form of a ply of mineral fibres.

26. A textile two-layer reinforcement according to either of claims 24 and 25, **characterized in that** the second layer is in the form of a ply of discontinuous glass fibres with chemical or thermal bonding.

27. A textile two-layer reinforcement according to any one of claims 18 to 26, **characterized in that** the weight of this second layer is between 10 g/m² and 100 g/m².

28. A textile two-layer reinforcement according to claim 27, **characterized in that** the weight of this second layer is between 40 g/m² and 60 g/m².

29. The use of a textile two-layer reinforcement according to any one of claims 18 to 28, **characterized in that** the reinforcement is intended for the production of bituminous roofing membranes.
